# FASCICULE DE BREVET EUROPEEN

(11) **EP 3 643 394 B1**
(45) Date de publication et mention de la délivrance du brevet: **17.08.2022**
(21) Numéro de dépôt: 19201819.0
(22) Date de dépôt: 08.10.2019
(51) Int. Cl.: B01D 53/26, B01D 5/00, B01D 53/14, B01D 53/28, C10L 3/10

(54) **PROCÉDÉ DE DÉSHYDRATATION D'UN GAZ HYDROCARBONE**
DEHYDRIERUNGSVERFAHREN EINES KOHLENWASSERSTOFFGASES
METHOD FOR DEHYDRATING A HYDROCARBON GAS

(30) Priorité: 26.10.2018 FR 1871313
(43) Date de publication de la demande: 29.04.2020
(73) Titulaire: AXENS, 92500 Rueil-Malmaison Cedex (FR)
(72) Inventeur: LANFREY, Pierre-Yves, 92500 Rueil-Malmaison Cedex (FR); PARER, Guillaume, 92500 Rueil-Malmaison Cedex (FR); CHAMBON, Bernard, 92500 Rueil-Malmaison Cedex (FR)
(74) Mandataire: IFP Energies nouvelles

(56) Documents cités:
- EP-A1- 0 598 657
- EP-A1- 1 372 824
- US-A- 3 105 748
- US-A- 3 736 725
- US-A- 4 009 083
- US-A- 5 453 114
- US-A1- 2008 041 228

## Description

### Domaine technique

L'invention concerne un procédé de déshydratation de gaz naturel au moyen d'un dessicant liquide mettant en œuvre l'utilisation d'une boucle ouverte d'un flux d'hydrocarbures.

### Technique antérieure

La déshydratation d'un gaz, par exemple d'un gaz naturel ou un gaz de raffinerie est une opération classique. Elle permet de contrôler le point de rosée en eau, c'est-à-dire la teneur en eau du gaz, pour éviter la formation d'hydrates ou de glace lors du transport ou de l'utilisation de ce gaz, de réduire les risques de corrosion, ou pour toute autre raison.

Dans ce but, il est courant de mettre en contact le gaz avec un dessiccant liquide hydrophile. Parmi ces derniers les composés de la famille chimique des glycols est d'un usage très répandu.

Par exemple, le document US 3,105,748 décrit un procédé de régénération de glycol selon l'état de l'art. Une telle unité de régénération comporte une étape thermique pour semi-régénérer le glycol par séparation en effectuant une évaporation de l'eau contenue dans le glycol liquide. Cette séparation met en œuvre un système de distillation du glycol chargé en eau. En outre, US 3,105,748 propose une étape de stripage du glycol semi-régénéré par une partie du gaz naturel déshydraté, sans autre séparation, donc riche en méthane, pour pousser la régénération du glycol liquide. Cependant, un agent de stripage riche en méthane n'est pas le plus performant pour régénérer le glycol chargé en eau.

Par ailleurs, le document US 5,643,421 décrit un procédé de séparation et de retrait de l'eau contenue dans un mélange de gaz et d'eau au moyen d'un dessicant liquide, ainsi que le retrait de l'eau du dessicant liquide afin de pouvoir réutiliser le dessicant liquide déshydraté. Ce procédé propose d'utiliser une coupe d'hydrocarbures comme les naphtas ou les gazolines comme agent de stripage pour encore améliorer la pureté du dessicant liquide, en comparaison au procédé décrit par le document US 3,105,748. Selon le document US 5,643,421, l'agent de stripage est obtenu au moins en partie grâce à l'absorption des hydrocarbures par le dessicant liquide lors du contact entre le gaz à déshydrater et le dessicant régénéré. Après utilisation dans la colonne de stripage, l'agent de stripage est en partie récupéré par condensation/séparation, et éventuellement déshydraté par un adsorbent solide, afin d'être revaporisé et utilisé à nouveau en tant qu'agent de stripage. Ce procédé améliore significativement la pureté du dessicant liquide et donc la dépression possible du point de rosé en eau du gaz à déshydrater, notamment quand l'agent de stripage est déshydraté, en particulier au moyen de sécheurs, avant d'être envoyé, notamment vaporisé et surchauffé, dans la colonne de stripage.

US 5 453 114 décrit une méthode de déshydratation des gaz naturels, avec l'intention de réduire des émissions d'impuretés hydrocarbures.

Cependant, La Demanderesse a remarqué que l'appoint nécessaire en coupe hydrocarbures pour maintenir l'inventaire dans la boucle fermée d'agent de stripage ne peut pas toujours être assuré par la seule coabsorption d'hydrocarbures par le dessicant liquide depuis le gaz ou lors du démarrage. Par conséquent, un appoint depuis une source extérieure d'agent de stripage peut être nécessaire. De plus le procédé nécessite un dispositif spécifique pour régénérer, c'est-à-dire sécher, l'agent de stripage chargé en eau.

De plus, la Demanderesse a observé que certains gaz à sécher contiennent des hydrocarbures très lourds (des C12+) à des teneurs faibles (par exemples à des teneurs de l'ordre de 1 à 10 ppm poids). Bien que les quantités soient très faibles, ces composés hydrocarbures très lourds peuvent être fortement absorbés par le dessicant liquide et peuvent s'accumuler rapidement dans la boucle de régénération du dessicant liquide du procédé décrit dans le document US 5,643,421. L'accumulation de ces hydrocarbures très lourds réduit la capacité du dessicant liquide à déshydrater le gaz et oblige les opérateurs à procéder à des opérations de purge ou d'écrémage des hydrocarbures qui peuvent induire des pertes en dessicant liquide.

### Résumé de l'invention

Dans la présente description, la mention « hydrocarbures Cx » désigne les composés hydrocarbures comportant x atomes de carbone. La mention « hydrocarbures Cx+ » désigne les composés hydrocarbonés ayant au moins x atomes de carbone. La mention « hydrocarbures Cx à Cy » désigne les composés hydrocarbures ayant entre x et y atomes de carbones.

Dans la présente description, la mention « riche en composé X» signifie que la fraction, coupe ou flux comporte au moins 50%, voire au moins 70%, voire au moins 80% poids du composé X. Dans la présente description, la mention « appauvri en composé Y », respectivement « enrichi en composé Z » signifie que l'entité « appauvri » contient moins de composé Y après l'opération effectuée, respectivement que l'entité « enrichi » contient plus de composé Z après l'opération effectuée.

La présente invention propose d'utiliser un flux sec et riche en hydrocarbures C4 à C10 comme agent de stripage pour améliorer la régénération du dessicant liquide selon l'invention. Ce flux sec et riche en hydrocarbures C4 à C10 est extrait du gaz issu de la déshydratation, par exemple au cours d'une étape d'extraction de Liquides de Gaz Naturel située en aval de l'unité de déshydratation du gaz. Le flux d'agent de stripage récupéré en sortie de l'unité de régénération du dessicant liquide peut être recyclé dans le procédé de l'invention ou envoyé dans une unité externe au procédé selon l'invention. Par exemple ce flux d'agent de stripage récupéré en sortie de l'unité de régénération est envoyé vers une unité pouvant accueillir des condensats humides, telle qu'une unité de séparation triphasique en entrée d'usine de traitement du gaz brut, une unité de stabilisation de condensats, etc.

En outre, la présente invention propose un dispositif permettant d'éviter l'accumulation de composés hydrocarbures lourds dans l'unité de régénération du dessicant liquide.

Les caractéristiques essentielles de la présente invention sont explicitement définies dans le libellé de la revendication indépendante 1. D'autres caractéristiques de l'invention sont explicitement décrites dans les libellés des revendications dépendantes 2-11.

La présente invention a pour objet un procédé de déshydratation d'un gaz hydrocarboné humide dans lequel on effectue les étapes suivantes :
a) on fournit le gaz hydrocarboné brut consistant en un gaz naturel brut comportant du méthane, au moins des hydrocarbures C4+, et de l'eau, le gaz naturel brut étant fourni à une température T>20°C, à une pression P>1 MPa, le gaz étant au moins saturé en eau ou en hydrocarbures à la température T et à la pression P et
b) on effectue une séparation triphasique dudit gaz hydrocarboné brut, pour obtenir un gaz hydrocarboné humide, des condensats liquides hydrocarbonés et un effluent liquide aqueux, et on envoi ledit gaz hydrocarboné humide à l'étape c),
c) on met en contact ledit gaz hydrocarboné humide avec un liquide dessicant régénéré obtenu à l'étape e) pour obtenir un gaz déshydraté et un liquide dessicant chargé en eau, ledit gaz déshydraté comportant une teneur en eau inférieure à 5 ppm volume ,
d) on effectue une séparation d'une coupe riche en composés hydrocarbures C4 à C10 contenue dans le gaz déshydraté pour obtenir un gaz résiduel appauvri en hydrocarbures C4+ et un flux vapeur riche en hydrocarbures C4 à C10, dans lequel à l'étape d) on effectue les étapes suivantes :
   i) on extrait au moins une partie des hydrocarbures C4+ contenus dans le gaz déshydraté en effectuant des étapes de détente et/ou de réfrigération du gaz déshydraté pour produire un flux riche en hydrocarbures C4+,
   ii) on distille le flux riche en C4+ pour produire un flux enrichi en hydrocarbures C4 à C10,
   iii) on vaporise par chauffage au moins une partie du flux enrichi en hydrocarbures C4 à C10 pour produire le flux vapeur riche en hydrocarbures C4 à C10 déshydraté
e) on régénère le dessicant chargé en eau obtenu à l'étape c) en effectuant une étape de distillation du dessicant chargé en eau pour éliminer sous forme vapeur au moins une partie de l'eau et pour obtenir un flux dessicant liquide partiellement régénéré puis en effectuant une étape de stripage du flux dessicant liquide partiellement régénéré par mise en contact avec le flux vapeur riche en hydrocarbures C4 à C10 obtenu à l'étape d) pour obtenir le liquide dessicant régénéré et une fraction riche en hydrocarbures C4 à C10 et comportant de l'eau,
puis on effectue l'étape f) selon l'une des deux variantes suivantes :
variante 1 : on évacue dudit procédé ladite fraction riche en hydrocarbures C4 à C10 et comportant de l'eau
variante 2 : on envoie ladite fraction riche en hydrocarbures C4 à C10 et comportant de l'eau à l'étape b) dans laquelle on effectue une séparation triphasique dudit gaz hydrocarboné brut ainsi que la fraction riche en hydrocarbures C4 à C10 et comportant de l'eau issue de l'étape e).

De préférence dans la variante 1, on évacue dudit procédé ladite fraction riche en hydrocarbures C4 à C10 et comportant de l'eau dans toute unité pouvant accueillir des hydrocarbures condensés humides.

De préférence, à la variante 2, à l'étape b), le gaz hydrocarboné brut est mélangé avec la fraction riche en hydrocarbures C4 à C10 et comportant de l'eau avant d'effectuer la séparation triphasique.

De préférence, à la variante 2, à l'étape b), la séparation triphasique est effectuée dans au moins un ballon séparateur et dans lequel on introduit séparément le gaz hydrocarboné brut et la fraction riche en hydrocarbures C4 à C10 et comportant de l'eau dans au moins un ballon séparateur.

Avantageusement, à l'étape iii) on vaporise une partie du flux enrichi en hydrocarbures C4 à C10, puis on surchauffe la partie vaporisée pour produire le flux vapeur riche en hydrocarbures C4 à C10 et on évacue du procédé la partie non vaporisée du flux enrichi en hydrocarbures C4 à C10 sous forme liquide.

Avantageusement, à l'étape iii), on vaporise la totalité du flux enrichi en hydrocarbures C4 à C10, puis on surchauffe le flux vaporisé pour produire le flux vapeur riche en hydrocarbures C4 à C10.

Avantageusement, à l'étape iii), on surchauffe le flux enrichi en hydrocarbures C4 à C10 pour produire le flux vapeur riche en hydrocarbures C4 à C10.

De préférence, on effectue la vaporisation par chauffage à une température comprise entre 80°C et 200°C et une pression de 0,1 à 0,5 MPa et on surchauffe à une température comprise à une température comprise entre 210°C et 250°C et une pression de 0,1 à 0,5 MPa.

De préférence, à l'étape e), la mise en contact du flux vapeur riche en hydrocarbures C4 à C10 avec le liquide dessicant chargé en eau permet d'obtenir le liquide dessicant régénéré, ainsi qu'un flux vapeur riche en hydrocarbures C4 à C10 et contenant de l'eau, que l'on condense au moins partiellement pour obtenir la fraction riche en hydrocarbures C4 à C10 et comportant de l'eau au moins partiellement sous forme liquide.

Avantageusement, le liquide dessicant est choisi dans la famille chimique des glycols.

Avantageusement, on choisit les conditions opératoires de la séparation à l'étape d) pour que le flux de vapeur enrichi en hydrocarbures C4 à C10 comprenne des hydrocarbures aromatiques.

De préférence, à l'étape d), on n'effectue pas d'étape de séchage du flux vapeur riche en hydrocarbures C4 à C10.

La présente invention permet d'éviter l'approvisionnement d'un flux externe pour régénérer le dessicant. Le procédé selon l'invention peut donc fonctionner facilement en site isolé, par exemple sur une barge en mer (offshore).

La présente invention permet de limiter la teneur, voire d'éliminer les hydrocarbures lourds, notamment les hydrocarbures C12+, voire C15+, qui peuvent contaminer le dessicant liquide si le flux de gaz à traiter en contient avant utilisation de la présente invention.

Par ailleurs le procédé selon l'invention peut être aisément mis en œuvre en remaniant une unité de déshydratation conventionnelle existante.

Enfin, le procédé selon l'invention présente une simplicité dans la mise en œuvre, en particulier ne nécessite pas l'utilisation d'un coalescer liquide-liquide ou de solide adsorbant de l'eau pour déshydrater l'agent de stripage.

### Liste des figures

L'invention sera ci-après détaillée à l'aide d'exemples non limitatifs du procédé selon l'invention, illustrés par les figures suivantes :
La figure 1 est une représentation synoptique, de type schéma-bloc, du principe général du procédé de déshydratation d'un gaz hydrocarboné brut selon l'invention.
Les figures 2 et 3 représentent deux modes de réalisation de l'unité de séparation 70 représentée par la figure 1.

### Description des modes de réalisation

Les étapes a) à e) du procédé de déshydratation selon l'invention sont décrites en détail ci-après.

Etape a) : On fournit un gaz hydrocarboné brut comportant du méthane, au moins des hydrocarbures C4+, et de l'eau.

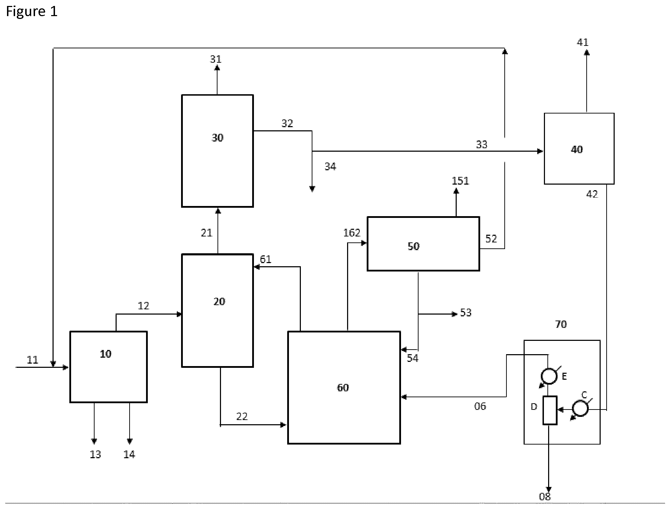

En référence à la figure 1, le gaz hydrocarboné brut à traiter arrive par le conduit 11.

Le gaz hydrocarboné brut contient du méthane, des hydrocarbures C4+ et de l'eau. L'invention est particulièrement bien adaptée au traitement d'un gaz comportant des hydrocarbures C12+, voire C15+, même en quantité très faible, c'est-à-dire à des teneurs possiblement inférieures à 10ppm poids.

Le gaz hydrocarboné brut est un gaz naturel. En particulier, le gaz peut être un gaz naturel brut obtenu en sortie de puits de production, par exemple sur une plateforme ou barge en mer (offshore).

Le gaz hydrocarboné brut peut être saturé ou sursaturé en eau et/ou en hydrocarbures, c'est-à-dire qu'il est à son point de rosée en eau et/ou hydrocarbure, à la pression et à la température à laquelle il est disponible. Le gaz hydrocarboné peut également être sursaturé en eau et/ou en hydrocarbures, c'est-à-dire qu'il contient une quantité d'eau et/ou d'hydrocarbures sous forme liquide.

Le gaz hydrocarboné brut est disponible à haute pression supérieure à 1 MPa, par exemple à une pression comprise entre 0 et 10 MPa, par exemple à une pression comprise entre 2 et 12 MPa. Le gaz hydrocarboné brut est à une température supérieure à 20°C, par exemple à une température comprise entre 0°C et 100°C, par exemple à une température comprise entre 40°C et 80°C.

Etape b) : On effectue une séparation triphasique dudit gaz hydrocarboné brut, ainsi qu'optionnellement, une fraction riche en hydrocarbures C4 à C10 et comportant de l'eau, pour obtenir un gaz hydrocarboné humide, des condensats liquides hydrocarbonés et un effluent liquide aqueux.

En référence à la figure 1, le gaz hydrocarboné brut arrive par le conduit 11 dans l'unité de séparation triphasique 10. Dans l'unité 10 le gaz subit au moins une ou des étapes de séparation liquide liquide et de séparation gaz liquide.

Si nécessaire, le gaz peut aussi être refroidi dans l'unité 10, par exemple à une température comprise entre 20 et 60°C, de préférence entre 20 et 40°C. Le refroidissement du gaz permet de condenser de l'eau et des hydrocarbures lourds en plus grandes proportions. La séparation entre le gaz, l'eau liquide et les hydrocarbures liquides peut être réalisée dans un ou plusieurs ballons séparateurs. L'unité 10 peut aussi inclure si nécessaire un système additionnel de traitement du gaz humide séparé comme par exemple un système de retrait des gaz acides (par exemple par absorption par une solution absorbante comportant des aminés).

L'eau liquide est évacuée de l'unité 10 par le conduit 13. Des hydrocarbures lourds liquides sont évacués par le conduit 14. Un gaz généralement appauvri au moins en hydrocarbure lourds et en eau, par rapport au gaz brut arrivant par le conduit 11, est évacué de l'unité 10 par le conduit 12.

Une fraction riche en hydrocarbures C4 à C10 et en eau produite par le procédé selon l'invention peut être également soumise à l'étape b) de séparation triphasique. En référence à la figure 1 cette fraction arrive par le conduit 52. Cette fraction peut être mélangée avec le gaz hydrocarboné brut arrivant par le conduit 11. Cette fraction peut également être directement introduite dans l'unité 10 par exemple en étant introduite dans le ballon séparateur ou dans un des ballons séparateurs si plusieurs ballons séparateurs sont mis en œuvre ou envoyé vers toute unité pouvant accueillir des condensats humides.

Etape c) : On met en contact le gaz hydrocarboné humide avec un dessicant liquide régénéré obtenu à l'étape e) pour obtenir un gaz déshydraté et un dessicant liquide chargé en eau.

Selon l'invention, le gaz hydrocarboné humide peut également provenir d'une autre source que l'étape a) et b) décrites ci-dessus. Le gaz hydrocarboné humide contient du méthane, des hydrocarbures C4+ et de l'eau. Le gaz hydrocarboné humide peut être saturé en eau et/ou en hydrocarbures, c'est-à-dire qu'il est à son point de rosée en eau et/ou hydrocarbure, à la pression et à la température à laquelle il est disponible. Le gaz hydrocarboné humide peut être disponible à haute pression par exemple à une pression comprise entre 0 et 10 MPa, de préférence supérieure à 1 MPa, par exemple à une pression comprise entre 2 et 12 MPa. Le gaz hydrocarboné humide peut être à une température comprise entre 0°C et 100°C, de préférence à une température supérieure à 20°C, par exemple à une température comprise entre 40°C et 80°C.

En référence à la figure 1, le gaz humide circulant dans le conduit 12 est introduit dans l'unité de déshydratation 20 pour être mis en contact avec le dessicant liquide régénéré arrivant par le conduit 61.

Le dessicant liquide peut être choisi dans la famille chimique des glycols. Par exemple, on utilise le triéthylèneglycol (TEG) le monoéthylèneglycol (MEG), le diéthylèneglycol (DEG) ou le tétraéthylèneglycol (T4EG). De préférence, selon l'invention, on met en œuvre le triéthylèneglycol (TEG) à cause de sa forte affinité pour l'eau, de sa stabilité chimique et de son faible coût.

Dans l'unité 20, le gaz humide peut être mis en contact à contre-courant avec le dessicant liquide dans une colonne munie par exemple de garnissage vrac, structuré ou de plateau de distillation. Le gaz est introduit à un niveau en bas de la colonne, le dessicant liquide étant introduit à un niveau en haut de la colonne. Lors du contact du gaz avec le dessicant liquide, l'eau contenue dans le gaz est absorbée par le dessicant liquide de manière à produire un gaz déshydraté et un dessicant liquide chargé en eau. Le gaz déshydraté comporte une teneur en eau inférieure à 5 ppm en volume, de préférence inférieure à 1 ppm en volume.

Le gaz déshydraté est évacué par le conduit 21 de l'unité 20. Le dessicant liquide chargé en eau est évacué de l'unité 20 par le conduit 22 pour être introduit dans l'unité de régénération composée généralement des unités 50 et 60.

Etape d) : On effectue une séparation d'une coupe de composés hydrocarbures C4 à C10 contenue dans le gaz déshydraté pour obtenir un gaz résiduel pauvre en hydrocarbures C4+ et un flux vapeur riche en hydrocarbures C4 à C10. Ainsi, selon l'invention, on obtient un flux vapeur riche en hydrocarbures C4 à C10 qui est également déshydraté, qui va servir d'agent de stripage à l'étape e). L'étape d) permet de produire un flux vapeur C4 à C10 directement déshydraté. L'étape d) peut donc être dépourvue d'une étape de séchage. Dans d'autres procédés différents de l'invention, une étape de séchage peut être mise en œuvre pour sécher un agent de strippage. L'étape de séchage peut être mise en œuvre typiquement dans un coalesceur suivi de sécheurs (par exemple, sur tamis moléculaires, « molecular sieve » selon la terminologie anglo-saxonne), opérant cycliquement avec au moins un sécheur en phase d'adsorption pendant qu'au moins un autre sécheur est en phase de régénération. La charge de ces sécheurs est typiquement en phase liquide. Ainsi, de préférence, l'étape d) est mise en œuvre sans sécheurs c'est-à-dire avec un nombre réduit d'équipements et des équipements de taille réduite.

Par ailleurs, l'étape d) permet de produire un gaz résiduel pauvre en hydrocarbures C4+ qui est déshydraté.

Le gaz déshydraté circulant dans le conduit 21 est introduit dans une unité 30 d'extraction des Liquides de Gaz Naturel (couramment nommée unité d'extraction des LGN). L'unité 30 met en œuvre des étapes de détente et/ou de refroidissement permettant la condensation d'hydrocarbures à faible température. Par exemple, l'unité 30 met en œuvre la détente du gaz, par exemple dans une vanne ou une turbomachine, ou une boucle de réfrigération externe ou une combinaison de ces méthodes pour apporter la réfrigération nécessaire du gaz entrant. Les hydrocarbures condensés sont séparés du gaz sous forme liquide. Puis les hydrocarbures liquides extraits peuvent si nécessaire être stabilisés dans l'unité 30, par exemple en éliminant l'éthane par distillation, pour assurer la qualité et la quantité requise du gaz résiduel (flux 31) ou celles des LGN (flux 34) produits par l'installation de traitement de gaz. Ainsi, l'unité 30 permet d'extraire les composés hydrocarbures les plus lourds et notamment les C4+ contenu dans le gaz déshydraté. De préférence, les conditions opératoires de fonctionnement de l'unité 30 sont adaptées de manière à extraire un maximum de composés aromatiques (couramment nommés BTX) avec la coupe de LGN produite. Les conditions opératoires de l'unité 30 peuvent être choisies par les besoins liés à la spécification en point de rosé en hydrocarbure du gaz évacué par le conduit 31 ou le taux de récupération souhaité d'hydrocarbures valorisables sous forme liquide (par exemple LGN ou C5+) évacués par le conduit 34.

Le gaz résiduel est évacué de l'unité 30 par le conduit 31. Ce gaz résiduel est appauvri en hydrocarbures C4+ par rapport au gaz déshydraté entrant dans l'unité 30 par le conduit 21. Le flux riche en hydrocarbures C4+ (également nommé LGN) qui ont été extraits du gaz déshydraté par l'unité 30 est évacué par le conduit 32. Une partie de ce flux peut être évacué du procédé par le conduit 34.

L'autre partie, ou l'intégralité, du flux riche en hydrocarbures C4+ est introduit dans une unité de stabilisation 40 via le conduit 33 pour produire une coupe enrichie en hydrocarbures C4 à C10. De préférence le fonctionnement de l'unité de stabilisation 40 est adapté pour produire une coupe liquide riche en hydrocarbures C4 à C10 comportant des composés aromatiques. La configuration de l'unité de stabilisation 40 peut varier par exemple selon la qualité du LGN entrant et la qualité requise de la coupe riche en hydrocarbures C4 à C10 (notamment le point de bulle et le point de rosée). De préférence l'unité 40 est composée d'une colonne de distillation équipée d'un système de rebouillage. Si besoin, la colonne de distillation peut être équipée d'un système de reflux pour permettre la distillation idoine.

L'unité 40 génère une fraction gazeuse évacuée par le conduit 41 et pouvant être éventuellement recyclé, et la coupe liquide riche en hydrocarbures C4 à C10 qui est évacuée par le conduit 42.

Selon une première variante de l'invention, la coupe riche en hydrocarbures C4 à C10 est introduite par le conduit 42 dans l'unité 70 de vaporisation qui permet de vaporiser et de surchauffer la coupe riche en hydrocarbures C4 à C10. Dans ce cas, l'unité 70 est composée d'un ou plusieurs échangeurs de chaleur, qui permet de chauffer la coupe riche en hydrocarbures C4 à C10 à une température comprise entre 210°C et 250°C, de préférence à une température comprise entre 215°C et 230°C. Cette première variante n'est pas conforme à la représentation de l'unité 70 de la figure 1.

Selon une deuxième variante de l'invention, illustrée par l'unité 70 de la figure 1, la coupe riche en hydrocarbures C4 à C10 est introduite par le conduit 42 dans l'unité 70 de séparation et vaporisation qui permet d'extraire les composés hydrocarbures les plus lourds, notamment les composés hydrocarbures C15+. La coupe riche en hydrocarbures C4 à C10 est vaporisée en deux étapes. En référence à la figure 1, un premier vaporisateur C vaporise la coupe riche en hydrocarbures C4 à C10 en partie ou en totalité selon la teneur en hydrocarbures lourds (c'est-à-dire des hydrocarbures C12+, voire C15+), par exemple à une température comprise entre 80°C et 200°C, de préférence entre 110°C et 190°C, voire entre 150°C et 180°C et par exemple à une pression comprise entre 0,1 et 0,5 MPa, typiquement entre 0,15 et 0,25 MPa. Les hydrocarbures lourds, notamment les hydrocarbures C12+, voire C15+ s'ils sont présents, n'ayant pas été vaporisés sont séparés sous forme liquide dans le séparateur D et évacués du procédé par le conduit 8. L'unité 70 permet ainsi d'extraire les composés hydrocarbures lourds de la coupe riche en hydrocarbures C4 à C10. La composition de la coupe riche en hydrocarbures C4 à C10 arrivant par le conduit 42 peut varier en fonction de la composition du gaz hydrocarboné brut à traiter et peut être ajustée en modifiant les conditions opératoires des unités 30 et 40 en cours d'opération.

Puis la coupe riche en hydrocarbures C4 à C10 sous forme vapeur provenant du séparateur D est surchauffée, par exemple à une température comprise entre 210°C et 250°C, de préférence entre 215°C et 230°C et par exemple à une pression entre 1 et 5 bar absolus (soit 0,1 à 0,5 MPa), typiquement entre 0,15 et 0,25 MPa, dans le surchauffeur E. La coupe riche en hydrocarbures C4 à C10 surchauffée est introduite par le conduit 06 dans l'unité de régénération du dessicant 60.

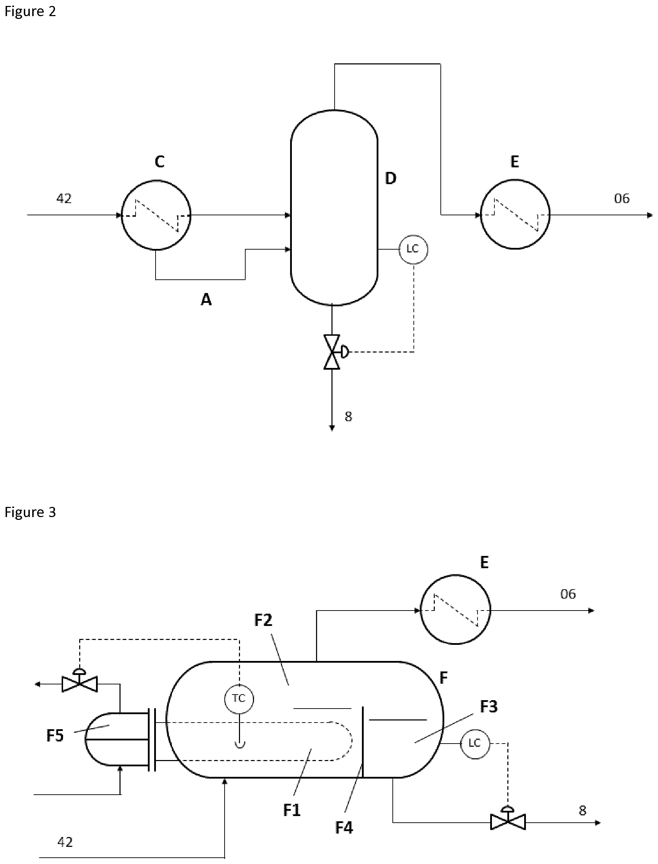

Les figures 2 et 3 représentent deux exemples de réalisation de l'unité 70. Les références des figures 2 et 3 identiques à celles de la figure 1 désignent les mêmes éléments.

En référence à la figure 2, la coupe riche en hydrocarbures C4 à C10 provenant de l'unité 40 par le conduit 42 est d'abord chauffée à une température intermédiaire, par exemple comprise entre 150°C et 180°C dans l'échangeur de chaleur C. L'échangeur de chaleur C peut être de type à plaques ou tubulaire utilisant un fluide chaud, par exemple le dessicant régénéré, de l'huile chaude, ou de la vapeur. En fonction de la composition de la coupe riche en hydrocarbures C4 à C10, le chauffage réalisé dans l'échangeur de chaleur C permet de réaliser une vaporisation totale ou partielle. La coupe riche en hydrocarbures C4 à C10 issue de C est introduite dans le ballon séparateur D où les hydrocarbures lourds non vaporisés, notamment les hydrocarbures C12+, voire C15+, si existants, sont séparés de la phase gazeuse afin d'être extrait du procédé par le conduit 8. Par exemple, l'évacuation par le conduit 8 est commandée par une vanne contrôlée par le détecteur de niveau liquide LC dans le ballon séparateur D. La phase gazeuse évacuée du ballon séparateur D est envoyée dans l'échangeur de chaleur E, également nommé surchauffeur, qui peut être électrique ou utiliser un fluide chaud afin d'être chauffée à une température comprise entre 210°C et 250°C, de préférence entre 215°C et 230°C. Puis la vapeur surchauffée est évacuée par le conduit 06 dans le dispositif de régénération du dessicant liquide 60.

Dans un mode particulier de réalisation de l'invention, l'échangeur de chaleur C peut comporter un système de drainage qui permet d'extraire du liquide non vaporisé dans l'échangeur C pour l'introduire dans le ballon séparateur D. Le drainage du liquide peut être effectué par gravité. Par exemple, une conduite A relie l'échangeur C au ballon D, la conduite A étant connectée à un point bas de l'échangeur de chaleur C. Ce mode de réalisation est bien adapté pour un échangeur de chaleur de type tubulaire.

Selon un autre mode particulier de réalisation de l'invention illustrée par la figure 3, l'échangeur de chaleur C et le ballon séparateur D de l'unité 70 sont fusionnés dans un seul appareil composé d'un rebouilleur à bain liquide F, couramment nommé « kettel ». Le rebouilleur est composée d'une enceinte comportant deux zones F1 et F3 situées dans la partie inférieure de l'enceinte et une zone F2 située dans la partie supérieure de l'enceinte. Les zones F1 et F3 sont séparées par une paroi F4, qui peut s'étendre depuis le fond de l'enceinte jusqu'à mi-hauteur pour former les deux zones distinctes F1 et F3. La coupe riche en hydrocarbures C4 à C10 provenant de l'unité 40 est introduite dans la première zone F1 par le conduit 42. Le dispositif de chauffage F5 permet de chauffer le liquide dans la zone F1. Le dispositif de chauffage F5 peut mettre en œuvre un fluide chaud, mais également utiliser des éléments chauffants électriques. Sous l'action du dispositif de chauffage F5, la vapeur est générée dans la zone F2 et est évacuée pour être introduite dans le surchauffeur E. Puis la vapeur surchauffée est évacuée par le conduit 6 dans le dispositif de régénération du dessicant 60. Le liquide arrivant dans la zone F1 et qui n'est pas vaporisé déborde de la zone F1 au-dessus de la paroi F4 dans la zone F3 : il s'agit des hydrocarbures lourds non vaporisés. Ces hydrocarbures lourds liquides, notamment les hydrocarbures C12+, voire C15+, si existants, sont évacués par le conduit 8. Par exemple, l'évacuation par le conduit 8 est commandée par une vanne contrôlée par le détecteur de niveau liquide LC dans la zone F3.

La conception du rebouilleur à bain F permet de fonctionner suivant deux modes.

Mode vaporisateur partiel. Dans ce mode, la température opératoire du bain de chauffe dans la zone F1 est mise à son maximum admissible par exemple à une température comprise entre 80°C et 200°C, de préférence entre 110°C et 190°C, voire entre 150°C et 180°C et par exemple à une pression entre 0,1 et 0,5 MPa, typiquement entre 0,15 et 0,25 MPa. La fraction de la coupe riche en hydrocarbures C4 à C10 non vaporisée à cette température, c'est-à-dire les hydrocarbures lourds, s'écoulent par débordement au-dessus de la paroi F4 depuis la zone F1 dans la zone F3. Les hydrocarbures lourds, notamment les hydrocarbures C12+, voire C15+, si existants, sont extraits de la zone F3 par le conduit 8, par exemple sous contrôle de niveau du liquide dans la zone F3.

Mode vaporisateur total. Dans le cas où la coupe riche en hydrocarbures C4 à C10 ne contient pas d'hydrocarbures lourds, elle est totalement vaporisée dans la zone F1, par exemple à une température n'excédant pas 180°C, de préférence à une température comprise entre 80°C et 200°C, de préférence entre 110°C et 190°C, voire entre 150°C et 180°C et une pression entre 0,1 et 0,5 MPa, typiquement entre 0,15 et 0,25 MPa. La température opératoire dans la zone F1 est ajustée afin que le niveau liquide dans la zone F1 soit au-dessus du dispositif de chauffage F5, mais en dessous du bord supérieur de la paroi F4.

Dans les différents modes de réalisation de l'étape d), l'évacuation d'une partie des hydrocarbures lourds, notamment les hydrocarbures C12+, voire C15+, si existants, permet de limiter la teneur en hydrocarbures C12+ dans le flux vapeur riche en hydrocarbures C4 à C10 obtenu à l'étape d) et utiliser pour effectuer la régénération à l'étape e). De préférence, le flux vapeur riche en hydrocarbures C4 à C10 obtenu à l'étape d) contient moins de 0,5% molaire, de préférence moins de 0,05% molaire, voire moins de 0,02% molaire C12+. Concrètement l'évacuation des hydrocarbures C12+, voire C15+, si existants, est effectuée via le conduit 8.

Etape e) : On régénère le dessicant chargé en eau obtenu à l'étape c) on régénère le dessicant chargé en eau obtenu à l'étape c) en effectuant une étape de distillation du dessicant chargé en eau pour éliminer sous forme vapeur au moins une partie de l'eau et pour obtenir un flux dessicant liquide partiellement régénéré puis en effectuant une étape de stripage du flux dessicant liquide partiellement régénéré par mise en contact avec le flux vapeur riche en hydrocarbures C4 à C10 obtenu à l'étape d) pour obtenir le liquide dessicant régénéré et une fraction riche en hydrocarbures C4 à C10 et comportant de l'eau.

En référence à la figure 1, dans l'unité de régénération 60, on effectue la régénération du dessicant en effectuant une étape de stripage et en général également une étape de régénération thermique en amont de l'étape de stripage. Par exemple, on effectue une étape de régénération thermique du dessicant chargée en eau arrivant par le conduit 22 pour obtenir un dessicant partiellement régénéré. Puis on poursuit la régénération en effectuant une étape de stripage du dessicant partiellement régénéré. L'étape de régénération thermique peut être effectuée dans une colonne de distillation, qui peut être munie d'un rebouilleur en fond de colonne pour vaporiser et éliminer une partie de l'eau contenue dans le dessicant liquide sous forme vapeur. Puis le flux liquide de dessicant partiellement régénéré issu de la colonne de distillation est mis en contact avec le flux vapeur riche en hydrocarbures C4 à C10, également nommé agent de stripage, arrivant par le conduit 6. Le liquide dessicant régénéré obtenu après l'étape de stripage, c'est-à-dire appauvri en eau par rapport au liquide arrivant par le conduit 22, est renvoyé par le conduit 61 dans l'unité de déshydratation 20. Le flux vapeur riche en hydrocarbures C4 à C10 et chargé en eau est évacué de l'unité de régénération 60 par le conduit 162.

Dans l'unité de régénération, la mise en contact entre le liquide dessicant et l'agent de stripage peut être réalisée dans une colonne, couramment appelée colonne de stripage, dans lequel le liquide dessicant circule à contre-courant du flux vapeur riche en hydrocarbures C4 à C10. La colonne de stripage peut comporter des internes, par exemple du garnissage vrac ou structuré, ou des plateaux de distillation pour favoriser le contact entre le dessicant liquide et le flux vapeur. Lors de la mise en contact, l'eau contenue dans le dessicant liquide est extraite par l'agent de stripage.

L'agent de stripage chargé en eau évacué de l'unité 60 par le conduit 162 est introduit dans l'unité 50 qui permet au moins de recueillir une fraction riche en hydrocarbures C4 à C10 et comportant de l'eau sous forme liquide qui est évacuée par le conduit 52. Eventuellement l'unité de séparation 50 permet également de recueillir un flux riche en eau qui est renvoyé en partie par le conduit 54 dans l'unité de régénération et dont le surplus est évacué par le conduit 53 du procédé selon l'invention. Le flux 54 peut être introduit dans l'unité 60 comme débit de reflux dans la colonne de régénération thermique pour en réguler le fonctionnement et limiter les pertes en dessicant. La fraction gazeuse non recueillie de l'agent de stripage est évacuée de l'unité 50 par le conduit 151, pour être évacuée du procédé selon l'invention.

L'unité 50 de séparation peut mettre en œuvre une étape de refroidissement pour condenser partiellement, voire totalement l'agent de stripage arrivant par le conduit 162. Puis le flux au moins en partie condensé est introduit dans un ballon séparateur, par exemple un ballon séparateur triphasique qui permet de séparer une phase gazeuse, une phase liquide aqueuse et une phase liquide hydrocarbonée.

Etape f) : on réalise soit la variante 1 soit la variante 2, qui sont décrites ci-après.

Variante 1 : la fraction riche en hydrocarbures C4 à C10 et comportant de l'eau est envoyée hors du procédé selon l'invention, par exemple dans toute unité pouvant accueillir des hydrocarbures condensés humides. Dans ce cas, la fraction riche en hydrocarbures C4 à C10 et comportant de l'eau n'est pas envoyée à l'une des étapes a) à e) du procédé selon l'invention.

Variante 2 : on recycle ladite fraction riche en hydrocarbures C4 à C10 et comportant de l'eau à l'étape b).

La fraction riche en hydrocarbures C4 à C10 et comportant de l'eau est envoyée par le conduit 52 dans l'unité de séparation triphasique 10. Cette fraction peut être mélangée avec le gaz hydrocarboné brut arrivant par le conduit 11 en amont de l'unité 10. La fraction riche en hydrocarbures C4 à C10 et comportant de l'eau peut également être introduite dans l'unité 10 par exemple dans le ballon de séparation triphasique.

Ainsi, dans ce mode de réalisation, au moins une partie des hydrocarbures C4 à C10 recyclés vont à nouveau subir les étapes b) c) et d) du procédé selon l'invention et vont être ainsi débarrassés de l'eau. De plus cet enchainement d'étapes permet de capter les hydrocarbures lourds C15+ puis de les séparer lors de l'étape d).

Selon un mode particulier de réalisation de l'invention l'agent de stripage chargé en eau, c'est-à-dire le flux vapeur riche en hydrocarbures C4 à C10 et chargé en eau peut être directement envoyé par le conduit 162 sans passer par l'unité 50 vers l'unité 10.

### Exemples

L'exemple de fonctionnement du procédé de l'invention est décrit en référence à la figure 1.

On considère un gaz naturel brut, à saturation, produisant 340 ton/h de gaz dont la composition est décrit dans le tableau 1, conduit 12.

Ce gaz est produit à une pression de 75 bar g et une température de 35°C. Le gaz est saturé en eau, à une teneur de 0,1% molaire qui délivre un débit en eau de 330 kg/h.

Après passage du gaz naturel brut dans l'unité de séchage 20 on obtient un gaz sec dont la composition en eau est inférieure à 1 ppm molaire, soit un débit inférieur à 0,3 kg/h, et dont la composition est décrite dans le tableau 1, conduit 21.

Le liquide dessicant est un TriEthylèneGlycol avec une pureté binaire eau-TEG de 99,99% poids en TEG et 0,01% poids en eau.

La colonne de mise en contact du liquide dessicant avec le gaz humide dans l'unité 20 fonctionne environ aux conditions d'entrée du gaz à traiter.

L'unité 30 opère par une séparation par refroidissement du gaz déshydraté arrivant par le conduit 21 à environ -53°C et 4 MPa. L'unité 30 permet d'extraire un flux riche en C4+ et déshydraté dont la composition est décrite dans le tableau 1 conduit 32, ainsi qu'un gaz traité évacué par le conduit 31, dont la composition est décrite dans le tableau 1 conduit 31.

On n'utilise qu'environ 20% poids de la totalité du flux 32 riche en C4+ pour la régénération du dessicant liquide au niveau de l'unité 60. Après passage dans l'unité 40 puis 70 on obtient un agent de stripage circulant dans le conduit 06 ayant la composition décrite dans le tableau 1, conduit 06.

L'unité 70 réalise une vaporisation à une température de 115°C. Dans l'unité 70, on extrait le flux riche en C15+ par le conduit 08 ayant la composition décrit dans le tableau 1, conduit 08.

L'agent de stripage circulant dans le conduit 06 a une teneur en C11-C14 et en C15+ inférieure à celle du flux 42. La différence correspond au flux évacué par le conduit 08 dont la teneur en C11-C14 est de 1.8102 % mol et en C15+ de 1.0636%mol. Le débit molaire du flux 08 représente approximativement 1% du débit molaire de l'agent de stripage circulant dans le conduit 06. Seulement 12% des C10 présents dans le flux 42 ont été extraits dans le flux 08, tandis que 52% des C11-C14 et 89% des C15+ ont été extraits du flux 42 pour produire l'agent de stripage circulant dans le conduit 06.

Ainsi à partir du gaz déshydraté arrivant par le conduit 21, l'agent de stripage circulant dans le conduit 06 a été produit. Comparé à ce gaz déshydraté, il est également déshydraté mais est composé essentiellement de C4-C10.

**Tableau 1**

| Composition % molaire | Conduit 12 | Conduit 21 | Conduit 31 | Conduit 32 | Conduit 08 | Conduit 06 |
|---|---|---|---|---|---|---|
| N₂ | 0,8010 | 0,8019 | 0,8311 | 0,0000 | 0,0000 | 0,0000 |
| CO₂ | 1,1998 | 1,1989 | 1,2423 | 0,0013 | 0,0000 | 0,0000 |
| C₁ | 88,0639 | 88,1660 | 91,3690 | 0,0009 | 0,0000 | 0,0000 |
| C₂ | 4,9928 | 4,9973 | 5,1422 | 1,0501 | 0,0000 | 0,0000 |
| C₃ | 2,9827 | 2,9839 | 1,2748 | 52,5037 | 0,0005 | 0,0068 |
| IC₄ | 0,4939 | 0,4932 | 0,0758 | 12,5233 | 0,1355 | 1,0391 |
| n-C₄ | 0,5902 | 0,5892 | 0,0569 | 15,4764 | 1,7334 | 10,5207 |
| IC₅ | 0,1938 | 0,1942 | 0,0042 | 4,7412 | 5,7889 | 19,3047 |
| n-C₅ | 0,1924 | 0,1928 | 0,0032 | 4,6583 | 7,2832 | 20,6967 |
| n-C₆ | 0,1829 | 0,1833 | 0,0003 | 4,3528 | 17,0613 | 22,7685 |
| n-C₇ | 0,0826 | 0,0833 | 0,0000 | 1,9604 | 16,8173 | 10,7689 |
| n-C₈ | 0,0409 | 0,0409 | 0,0000 | 0,9596 | 17,2637 | 5,3589 |
| BTX | 0,0648 | 0,0590 | 0,0001 | 1,3966 | 11,5913 | 7,4374 |
| NONANE | 0,0097 | 0,0097 | 0,0000 | 0,2274 | 8,5248 | 1,2741 |
| DECANE | 0,0062 | 0,0062 | 0,0000 | 0,1444 | 10,9261 | 0,8063 |
| C₁₁-C₁₄ | 0,0005 | 0,0001 | 0,0000 | 0,0032 | 1,8102 | 0,0166 |
| C₁₅₊ | 0,0001 | 0,0000 | 0,0000 | 0,0004 | 1,0636 | 0,0013 |
| H₂O | 0,1016 | 0,0001 | 0,0001 | 0,0000 | 0,0000 | 0,0000 |

## Revendications

1. Procédé de déshydratation d'un gaz hydrocarboné humide dans lequel on effectue les étapes suivantes :
a) on fournit le gaz hydrocarboné brut consistant en un gaz naturel brut comportant du méthane, au moins des hydrocarbures C4+, et de l'eau, le gaz naturel brut étant fourni à une température T>20°C, à une pression P>1 MPa, le gaz étant au moins saturé en eau ou en hydrocarbures à la température T et à la pression P et
b) on effectue une séparation triphasique dudit gaz hydrocarboné brut, pour obtenir un gaz hydrocarboné humide, des condensats liquides hydrocarbonés et un effluent liquide aqueux, et on envoi ledit gaz hydrocarboné humide à l'étape c),
c) on met en contact ledit gaz hydrocarboné humide avec un liquide dessicant régénéré obtenu à l'étape e) pour obtenir un gaz déshydraté et un liquide dessicant chargé en eau, ledit gaz déshydraté comportant une teneur en eau inférieure à 5 ppm volume,
d) on effectue une séparation d'une coupe riche en composés hydrocarbures C4 à C10 contenue dans le gaz déshydraté pour obtenir un gaz résiduel appauvri en hydrocarbures C4+ et un flux vapeur riche en hydrocarbures C4 à C10, dans lequel à l'étape d) on effectue les étapes suivantes :
i) on extrait au moins une partie des hydrocarbures C4+ contenus dans le gaz déshydraté en effectuant des étapes de détente et/ou de réfrigération du gaz déshydraté pour produire un flux riche en hydrocarbures C4+,
ii) on distille le flux riche en C4+ pour produire un flux enrichi en hydrocarbures C4 à C10,
iii) on vaporise par chauffage au moins une partie du flux enrichi en hydrocarbures C4 à C10 pour produire le flux vapeur riche en hydrocarbures C4 à C10 déshydraté
e) on régénère le dessicant chargé en eau obtenu à l'étape c) en effectuant une étape de distillation du dessicant chargé en eau pour éliminer sous forme vapeur au moins une partie de l'eau et pour obtenir un flux dessicant liquide partiellement régénéré puis en effectuant une étape de stripage du flux dessicant liquide partiellement régénéré par mise en contact avec le flux vapeur riche en hydrocarbures C4 à C10 obtenu à l'étape d) pour obtenir le liquide dessicant régénéré et une fraction riche en hydrocarbures C4 à C10 et comportant de l'eau,
puis on effectue l'étape f) selon l'une des deux variantes suivantes :
variante 1 : on évacue dudit procédé ladite fraction riche en hydrocarbures C4 à C10 et comportant de l'eau
variante 2 : on envoie ladite fraction riche en hydrocarbures C4 à C10 et comportant de l'eau à l'étape b) dans laquelle on effectue une séparation triphasique dudit gaz hydrocarboné brut ainsi que la fraction riche en hydrocarbures C4 à C10 et comportant de l'eau issue de l'étape e).

2. Procédé selon la revendication 1, dans lequel à la variante 2, à l'étape b), le gaz hydrocarboné brut est mélangé avec la fraction riche en hydrocarbures C4 à C10 et comportant de l'eau avant d'effectuer la séparation triphasique.

3. Procédé selon la revendication 1, dans lequel à la variante 2, à l'étape b), la séparation triphasique est effectuée dans au moins un ballon séparateur et dans lequel on introduit séparément le gaz hydrocarboné brut et la fraction riche en hydrocarbures C4 à C10 et comportant de l'eau dans au moins un ballon séparateur.

4. Procédé selon la revendication 1, dans lequel, à l'étape iii) on vaporise une partie du flux enrichi en hydrocarbures C4 à C10, puis on surchauffe la partie vaporisée pour produire le flux vapeur riche en hydrocarbures C4 à C10 et on évacue du procédé la partie non vaporisée du flux enrichi en hydrocarbures C4 à C10 sous forme liquide.

5. Procédé selon la revendication 1, dans lequel à l'étape iii), on vaporise la totalité du flux enrichi en hydrocarbures C4 à C10, puis on surchauffe le flux vaporisé pour produire le flux vapeur riche en hydrocarbures C4 à C10.

6. Procédé selon la revendication 1, dans lequel à l'étape iii), on surchauffe le flux enrichi en hydrocarbures C4 à C10 pour produire le flux vapeur riche en hydrocarbures C4 à C10.

7. Procédé selon l'une des revendications 4 à 6 dans lequel on effectue la vaporisation par chauffage à une température comprise entre 80°C et 200°C et une pression de 0,1 à 0,5 MPa et on surchauffe à une température comprise à une température comprise entre 210°C et 250°C et une pression de 0,1 à 0,5 MPa.

8. Procédé selon l'une des revendications précédentes, dans lequel à l'étape e), la mise en contact du flux vapeur riche en hydrocarbures C4 à C10 avec le liquide dessicant chargé en eau permet d'obtenir le liquide dessicant régénéré, ainsi qu'un flux vapeur riche en hydrocarbures C4 à C10 et contenant de l'eau, que l'on condense au moins partiellement pour obtenir la fraction riche en hydrocarbures C4 à C10 et comportant de l'eau au moins partiellement sous forme liquide.

9. Procédé selon l'une des revendications précédentes, dans lequel le liquide dessicant est choisi dans la famille chimique des glycols.

10. Procédé selon l'une des revendications précédentes, dans lequel on choisit les conditions opératoires de la séparation à l'étape d) pour que le flux de vapeur enrichi en hydrocarbures C4 à C10 comprenne des hydrocarbures aromatiques.

11. Procédé selon l'une des revendications précédentes, dans lequel à l'étape d), on n'effectue pas d'étape de séchage du flux vapeur riche en hydrocarbures C4 à C10.

## Patentansprüche

1. Verfahren zur Entwässerung eines wasserhaltigen kohlenwasserstoffartigen Gases, wobei die folgenden Schritte durchgeführt werden:
a) Bereitstellen des unbehandelten kohlenwasserstoffartigen Gases, welches aus einem rohen Erdgas besteht, das Methan, zumindest Kohlenwasserstoffe des Typs C4+ sowie Wasser aufweist, wobei das unbehandelte Erdgas bei einer Temperatur T > 20 °C, bei einem Druck P > 1 MPa bereitgestellt wird, wobei Gas bei der Temperatur T und dem Druck P zumindest an Wasser oder an Kohlenwasserstoffen gesättigt ist, und
b) Durchführen einer Auftrennung des unbehandelten kohlenwasserstoffartigen Gases in drei Phasen, um ein wasserhaltiges kohlenwasserstoffartiges Gas, kohlenwasserstoffartige flüssige Kondensate und eine wässrigen flüssigen Stoffstrom zu erhalten, und Einleiten des wasserhaltigen kohlenwasserstoffartigen Gases in den Schritt c),
c) Inkontaktbringen des wasserhaltigen kohlenwasserstoffartigen Gases mit einem regenerierten flüssigen Trocknungsmittel, das im Schritt e) erhalten wurde, um ein entwässertes Gas und ein mit Wasser beladenes flüssiges Trocknungsmittel zu erhalten, wobei das entwässerte Gas einen Wassergehalt von weniger als 5 ppm nach Volumen aufweist,
d) Durchführen einer Abtrennung einer Fraktion, die reich an Kohlenwasserstoffverbindungen des Typs C4 bis C10 ist, wobei sie in dem entwässerten Gas enthalten war, um ein Restgas, welches an Kohlenwasserstoffen des Typs C4+ abgereichert ist, und einen dampfförmigen Stoffstrom zu erhalten welcher reich an Kohlenwasserstoffen des Typs C4 bis C10 ist, wobei im Schritt d) die folgenden Schritte durchgeführt werden:
i) Extrahieren zumindest einer Teilmenge der Kohlenwasserstoffe des Typs C4+, welche in dem entwässerten Gas enthalten sind, indem Schritte des Entspannens und/oder des Abkühlens des entwässerten Gases durchgeführt werden, um einen Stoffstrom zu erzeugen, der reich an Kohlenwasserstoffen des Typs C4+ ist,
ii) Destillieren des Stoffstroms, der reich an C4+ ist, um einen Stoffstrom zu erzeugen, der an Kohlenwasserstoffen des Typs C4 bis C10 angereichert ist,
iii) Verdampfen mindestens einer Teilmenge des Stoffstroms, welcher an Kohlenwasserstoffen des Typs C4 bis C10 angereichert ist, indem dieser erhitzt wird, um den entwässerten dampfförmigen Stoffstrom zu erzeugen, welcher reich an Kohlenwasserstoffen des Typs C4 bis C10 ist,
e) Regenerieren des mit Wasser beladenen Trocknungsmittels, welches im Schritt c) erhalten wurde, indem ein Schritt des Destillierens des mit Wasser beladenen Trocknungsmittels durchgeführt wird, um mindestens eine Teilmenge des Wassers in Form von Dampf zu entfernen und um einen teilweise regenerierten Stoffstrom an flüssigem Trocknungsmittel zu erhalten, woraufhin ein Schritt des Strippens des teilweise regenerierten Stoffstroms an flüssigem Trocknungsmittel durchgeführt wird, indem dieser mit dem dampfförmigen Stoffstrom in Kontakt gebracht wird, welcher an Kohlenwasserstoffen des Typs C4 bis C10 reich ist, wobei er im Schritt d) erhalten wurde, um das regenerierte flüssige Trocknungsmittel sowie eine Fraktion zu erhalten, welche reich an Kohlenwasserstoffen des Typs C4 bis C10 ist und Wasser aufweist,
um anschließend den Schritt f) gemäß einer der beiden folgenden Varianten durchzuführen:
Variante 1: Abführen der Fraktion, welche reich an Kohlenwasserstoffen des Typs C4 bis C10 ist und Wasser aufweist, aus dem Verfahren
Variante 2: Einleiten der Fraktion, die reich an Kohlenwasserstoffen des Typs C4 bis C10 ist und Wasser aufweist, in den Schritt b), in welchem das unbehandelte kohlenwasserstoffhaltige Gas sowie die Fraktion, welche reich an Kohlenwasserstoffen des Typs C4 bis C10 ist und Wasser aufweist, wobei sie aus dem Schritt e) stammt, in drei Phasen aufgetrennt werden.

2. Verfahren nach Anspruch 1, wobei gemäß der Variante 2 das unbehandelte kohlenwasserstoffartige Gas im Schritt b) im Vorfeld der Durchführung der Auftrennung in drei Phasen mit der Fraktion vermischt wird, welche reich an Kohlenwasserstoffen des Typs C4 bis C10 ist und Wasser aufweist.

3. Verfahren nach Anspruch 1, wobei gemäß der Variante 2 die Auftrennung in drei Phasen im Schritt b) in mindestens einem Trennkolben durchgeführt wird und wobei das unbehandelte kohlenwasserstoffartige Gas und die Fraktion, welche reich an Kohlenwasserstoffen des Typs C4 bis C10 ist und Wasser aufweist, getrennt voneinander in den mindestens einen Trennkolben eingeleitet werden.

4. Verfahren nach Anspruch 1, wobei im Schritt iii) eine Teilmenge des Stoffstroms verdampft wird, welcher an Kohlenwasserstoffen des Typs C4 bis C10 angereichert ist, um anschließend die verdampfte Teilmenge zu überhitzen, sodass der dampfförmige Stoffstrom erzeugt wird, welcher reich an Kohlenwasserstoffen des Typs C4 bis C10 ist, und die nicht verdampfte Teilmenge des Stoffstroms, welcher an Kohlenwasserstoffen des Typs C4 bis C10 angereichert ist, in flüssiger Form aus dem Verfahren entfernt wird.

5. Verfahren nach Anspruch 1, wobei im Schritt iii) die Gesamtheit des Stoffstroms verdampft wird, welcher an Kohlenwasserstoffen des Typs C4 bis C10 angereichert ist, um anschließend den verdampften Stoffstrom zu überhitzen, sodass der dampfförmige Stoffstrom erzeugt wird, welcher reich an Kohlenwasserstoffen des Typs C4 bis C10 ist.

6. Verfahren nach Anspruch 1, wobei im Schritt iii) der Stoffstrom, welcher an Kohlenwasserstoffen des Typs C4 bis C10 angereichert ist, überhitzt wird, um den dampfförmigen Stoffstrom zu erzeugen, welcher reich an Kohlenwasserstoffen des Typs C4 bis C10 ist.

7. Verfahren nach einem der Ansprüche 4 bis 6, wobei das Verdampfen durchgeführt wird, indem auf eine Temperatur im Bereich von 80 °C bis 200 °C und einen Druck von 0,1 bis 0,5 MPa erhitzt wird, und die Überhitzung bei einer Temperatur im Bereich von 210 bis 250 °C und einem Druck von 0,1 bis 0,5 MPa erfolgt.

8. Verfahren nach einem der vorhergehenden Ansprüche, wobei es im Schritt e) durch Inkontaktbringen des dampfförmigen Stoffstroms, welcher reich an Kohlenwasserstoffen des Typs C4 bis C10 ist, mit dem flüssigen Trocknungsmittel, welches mit Wasser beladen ist, ermöglicht wird, das regenerierte flüssige Trocknungsmittel sowie einen dampfförmigen Stoffstrom zu erhalten, der reich an Kohlenwasserstoffen des Typs C4 bis C10 ist, wobei er zumindest teilweise kondensiert wird, um die Fraktion, welche reich an Kohlenwasserstoffen des Typs C4 bis C10 ist und Wasser aufweist, zumindest teilweise in flüssiger Form zu erhalten.

9. Verfahren nach einem der vorhergehenden Ansprüche wobei das flüssige Trocknungsmittel aus der chemischen Familie der Glykole ausgewählt ist.

10. Verfahren nach einem der vorhergehenden Ansprüche, wobei im Schritt d) die Betriebsbedingungen der Abtrennung derart gewählt werden, dass der dampfförmige Stoffstrom, welcher an Kohlenwasserstoffen des Typs C4 bis C10 angereichert ist, aromatische Kohlenwasserstoffe umfasst.

11. Verfahren nach einem der vorhergehenden Ansprüche, wobei im Schritt d) keinerlei Schritt des Trocknens des dampfförmigen Stoffstroms, welcher reich an Kohlenwasserstoffen des Typs C4 bis C10 ist, durchgeführt wird.

## Claims

1. Process for dehydrating a wet hydrocarbon-based gas, in which the following steps are performed:
a) a crude hydrocarbon-based gas consisting of a crude natural gas including methane, at least C4+ hydrocarbons and water is supplied, the crude natural gas being supplied at a temperature T > 20°C, at a pressure P > 1 MPa, the gas being at least saturated with water or with hydrocarbons at the temperature T and at the pressure P, and
b) a three-phase separation is performed on said crude hydrocarbon-based gas, to obtain a wet hydrocarbon-based gas, hydrocarbon-based liquid condensates and an aqueous liquid effluent, and said wet hydrocarbon-based gas is sent to step c),
c) said wet hydrocarbon-based gas is placed in contact with a regenerated desiccant liquid obtained in step e) to obtain a dehydrated gas and a desiccant liquid charged with water, said dehydrated gas having a water content of less than 5 ppm by volume,
d) separation of a cut rich in C4 to C10 hydrocarbon compounds contained in the dehydrated gas is performed to obtain a residual gas depleted in C4+ hydrocarbons and a vapour stream rich in C4 to C10 hydrocarbons, in which, in step d), the following steps are performed:
i) at least a portion of the C4+ hydrocarbons contained in the dehydrated gas is extracted by performing steps of expansion and/or refrigeration of the dehydrated gas to produce a stream rich in C4+ hydrocarbons,
ii) the stream rich in C4+ is distilled to produce a stream enriched in C4 to C10 hydrocarbons,
iii) at least a portion of the stream enriched in C4 to C10 hydrocarbons is vapourized by heating to produce the dehydrated vapour stream rich in C4 to C10 hydrocarbons,
e) the desiccant charged with water obtained in step c) is regenerated by performing a step of distillation of the desiccant charged with water to remove in vapour form a portion of the water and to obtain a partially regenerated liquid desiccant stream and then by performing step of stripping the partially regenerated liquid desiccant stream by placing in contact with the vapour stream rich in C4 to C10 hydrocarbons obtained in step d) to obtain the regenerated desiccant liquid and a fraction rich in C4 to C10 hydrocarbons and including water,
step f) is then performed according to one of the two variants:
variant 1: said fraction rich in C4 to C10 hydrocarbons and including water is removed from said process
variant 2: said fraction rich in C4 to C10 hydrocarbons and including water is sent into step b) in which a three-phase separation is performed on said crude hydrocarbon-based gas and also the fraction rich in C4 to C10 hydrocarbons and including water obtained from step e).

2. Process according to Claim 1, in which, in variant 2 in step b), the crude hydrocarbon-based gas is mixed with the fraction rich in C4 to C10 hydrocarbons and including water before performing the three-phase separation.

3. Process according to Claim 1, in which, in variant 2 in step b), the three-phase separation is performed in at least one separating vessel and in which the crude hydrocarbon-based gas and the fraction rich in C4 to C10 hydrocarbons and including water are separately introduced into at least one separating vessel.

4. Process according to Claim 1, in which, in step iii), a portion of the stream enriched in C4 to C10 hydrocarbons is vapourized, the vapourized portion is then superheated to produce the vapour stream rich in C4 to C10 hydrocarbons and the non-vapourized portion of the stream enriched in C4 to C10 hydrocarbons is removed from the process in liquid form.

5. Process according to Claim 1, in which, in step iii), all of the stream enriched in C4 to C10 hydrocarbons is vapourized and the vapourized stream is then superheated to produce the vapour stream rich in C4 to C10 hydrocarbons.

6. Process according to Claim 4, in which, in step iii), the stream enriched in C4 to C10 hydrocarbons is superheated to produce the vapour stream rich in C4 to C10 hydrocarbons.

7. Process according to one of Claims 4 to 6, in which the vapourization is performed by heating at a temperature of between 80°C and 200°C and a pressure of from 0.1 to 0.5 MPa and superheating is performed to a temperature of between 210°C and 250°C and at a pressure of from 0.1 to 0.5 MPa.

8. Process according to one of the preceding claims, in which, in step e), the placing in contact of the vapour stream rich in C4 to C10 hydrocarbons with the desiccant liquid charged with water makes it possible to obtain the regenerated desiccant liquid, and also a vapour stream rich in C4 to C10 hydrocarbons and containing water, which is at least partially condensed to obtain the fraction rich in C4 to C10 hydrocarbons and including water at least partially in liquid form.

9. Process according to one of the preceding claims, in which the desiccant liquid is chosen from the chemical family of glycols.

10. Process according to one of the preceding claims, in which the operating conditions of the separation in step d) are chosen so that the vapour stream enriched in C4 to C10 hydrocarbons comprises aromatic hydrocarbons.

11. Process according to one of the preceding claims, in which, in step d), no step of drying of the vapour stream rich in C4 to C10 hydrocarbons is performed.
